# EUROPÄISCHE PATENTSCHRIFT

(11) **EP 2 096 844 B1**
(45) Veröffentlichungstag und Bekanntmachung des Hinweises auf die Patenterteilung: **01.08.2018**
(21) Anmeldenummer: 09153903.1
(22) Anmeldetag: 27.02.2009
(51) Int. Cl.: G06F 3/0482, H04M 1/725, H04M 1/2745

(54) **Verwaltungseinheit für Kommunikationsverbindungen und Verfahren zum Verwalten von Kommunikationsverbindungen auf einem mobilen Endgerät**
Management unit for communication connections and method for managing communication connections on a mobile terminal
Unité de gestion pour liaisons de communication et procédé de gestion de liaisons de communication sur un terminal mobile

(30) Priorität: 29.02.2008 DE 102008011861
(43) Veröffentlichungstag der Anmeldung: 02.09.2009
(73) Patentinhaber: Vodafone GmbH, 40549 Düsseldorf (DE)
(72) Erfinder: Schlich, Anja, 56745, Rieden (DE); Lasinski, Gerald, 23568 Lübeck (DE)
(74) Vertreter: Müller, Thomas

(56) Entgegenhaltungen:
- EP-A2- 1 879 359
- WO-A-2006/017138
- WO-A-2007/007166
- WO-A-2007/131316
- CA-A1- 2 541 620
- US-A1- 2006 053 379
- US-A1- 2006 135 142

## Beschreibung

Die vorliegende Erfindung betrifft eine Verwaltungseinheit für Kommunikationsverbindungen auf einem mobilen Endgerät sowie ein Verfahren zum Verwalten von Kommunikationsverbindungen auf einem mobilen Endgerät eines Kommunikationsnetzes.

Die Anzahl von Kommunikationsmöglichkeiten, die mit einem mobilen Endgerät, insbesondere einem Mobiltelefon zur Verfügung stehen, steigt ständig an. Neben einer reinen Sprachverbindung kann mit einem Mobiltelefon auch eine Kommunikation mittels anderer Inhalte, wie beispielsweise durch Versenden und Empfangen von Text-, Bild-, Video- und/oder Audionachrichten erfolgen. Wobei diese wiederum über unterschiedliche Übermittlungsarten übermittelt werden können. So ist beispielsweise ein Versenden von so genannten Short Message Service (SMS) Nachrichten oder von Sofortnachrichten (Instant Messaging IM) möglich. Zusätzlich zu der ständig steigenden Anzahl von möglichen Übermittlungsarten und Kommunikationsinhalten nimmt die Anzahl von Kontakten, mit denen über Mobiltelefone kommuniziert werden kann, aufgrund der zunehmenden Verbreitung von Mobiltelefonen zu.

Derzeit bekannte Verwaltungssysteme für Mobiltelefone erlauben es dem Nutzer nur eingeschränkt einen Überblick über die ihm zur Verfügung stehenden Möglichkeiten zu schaffen und auf einfache Weise Kommunikationsverbindungen mit gewünschten Kommunikationspartnern herstellen und nutzen zu können. In der Regel sind auf einem Mobiltelefon unterschiedliche Anwendungen vorgesehen, mittels derer Kommunikationsinhalte über unterschiedlichen Übermittlungsarten übermittelt werden können. Die für den Aufbau einer Kommunikationsverbindung notwendigen Kontaktinformationen hingegen sind wiederum in separaten Anwendungen abgelegt und werden dort verwaltet.

In der WO 2006/017138 A2 wird eine intelligente Benutzerschnittstelle beschrieben. Insbesondere wird ein Verfahren zur Navigation von Informationen in einem mobilen Endgerät beschrieben. Hierbei wird eine Vielzahl von Fensterbereichen angezeigt, wobei jede der Bereiche ein Behälter für Objekte ist, die zum Beispiel Anwendungen darstellen können. Zur Herstellung einer Kommunikationsverbindung wird vorgeschlagen, dass bei Auswahl eines Kontaktes die Kommunikationsverbindung hergestellt wird. Hierbei können in der Benutzerschnittstelle verfügbare Anwendungen angezeigt werden, die die Kommunikation zwischen Benutzern vereinfacht. Ein Nachteil dieser Benutzerschnittstelle besteht darin, dass die Anwendungen gegebenenfalls auf dem mobilen Endgerät verfügbar sein können aber dennoch aktuell nicht verwendet werden können.

In der WO 2007/007166 A2 wird eine Balken-Benutzeroberfläche beschrieben. Jeder der Balken dient für unterschiedliche Inhalte. So kann beispielsweise ein Balken für die Kontakte verwendet werden. Bei Auswahl eines der Balken wird der zugehörige Inhalt in einem Fenster angezeigt. Für das Herstellen von Kommunikationsverbindungen wird eine Darstellung einer weiteren Informationsebene verwendet. In der zweiten Informationsebene können häufig verwendete Steuerungen, wie beispielsweise "Nachrichten", "Chat", "Anruf" und dergleichen enthalten sein. Hierbei kann angezeigt werden, ob der ausgewählte Kontakt verfügbar ist. Dies wird als Information auf der Benutzeroberfläche angezeigt.

Schließlich offenbart WO 2007/131316 A1 eine Bildschirmschnittstelle für die Anzeige von eingegangenen Nachrichten und Kalenderevents. Insbesondere wird die Verwaltung bereits erfolgter Ereignisse, das heißt empfangener Nachrichten oder verpasster Anrufe beschrieben. Das Aufrufen der einzelnen Anwendungen erfolgt hierbei über ein klassisches Menü.

In der US 2006/0135142 A1 sind eine Vorrichtung und ein Verfahren zur Bereitstellung verbesserter Kontaktlisteninformationen für Mobiltelefone beschrieben. Hierbei wird die Art von Nachrichten, die ein Kontakt, der in der Kontaktliste enthalten ist, empfangen kann angegeben. Diese Informationen werden aktualisiert. Die Informationen zu den Kontakten können von einem automatisierten System aktualisiert werden. Hierzu kann der Benutzer entweder an dem Mobiltelefon eingeben, dass nach Diensten gesucht werden soll, bei denen der Kontakt Teilnehmer ist oder das Verfahren wird so automatisiert, dass das Mobiletelefon gelegentlich eine zentrale Datenbank nach aktuellen Nutzerinformationen abfragt.

EP 1 879 359 A2 beschreibt ein intelligentes Wiederwahlsystem mit Anwesenheitsinformationen beschrieben. Hierbei wird eine Zustandsmeldung erzeugt, die angibt, dass ein Nutzer nun an einem Kommunikationsgerät verfügbar ist.

US 2006/0053379A1 beschreibt ein System und ein Verfahren zur Bereitstellung einer Benutzerschnittstelle zum Steuern eines Kommunikationsmodus von einer Client-Vorrichtung. Die Schnittstelle ermöglicht es einem Benutzer eine Anwesenheit und/oder einen Kommunikationsmodus auszuwählen, der an andere Geräte oder an einen Server übertragen wird.

In der CA 2 541 620 A1 ist ein Verfahren zum Auswählen einer Kommunikationsmöglichkeit zur Kommunikation von einem mobilen Gerät beschrieben. Hierbei wird eine zuletzt mit einem Kontakt verwendete Kommunikationsmöglichkeit gespeichert. Bei Auswahl des Kontaktes wird dann der Cursor automatisch auf die zuvor verwendete Kommunikationsmöglichkeit gesetzt.

Ein Nachteil der bekannten Bildschirmschnittstellen besteht darin, dass bei diesen aufgrund der gewählten Anzeige die Verwaltung und Herstellung einer Kommunikationsverbindung aufwendig ist.

Die Aufgabe der vorliegenden Erfindung ist es somit eine Lösung zu schaffen mittels derer die Kommunikationsverbindungen von einem mobilen Endgerät aus auf einfache Weise verwaltet werden können.

Gemäß einem ersten Aspekt wird diese Aufgabe gelöst durch eine Verwaltungseinheit zur Verwaltung von Kommunikationsverbindungen mit den Merkmalen gemäß Anspruch 1.

Das mobile Endgerät stellt vorzugsweise ein Mobiltelefon oder einen PDA dar. Hierbei ist das mobile Endgerät zum Empfang und der Verarbeitung von Sprach-, Text- sowie von Multimedia Messaging Services (MMS) Nachrichten ausgelegt. Als Kommunikationsverbindung wird eine Verbindung zu zumindest einem weiteren mobilen Endgerät oder anderen Kommunikationsgerät bezeichnet, über die Nachrichten und Signale an das andere mobile Endgerät oder Kommunikationsgerät übermittelt werden. Als Kommunikationsverbindung wird insbesondere die Übermittlung von Nachrichten und Signalen nach dem Internet-Protokoll (IP) oder nach dem Protokoll eines Mobilfunknetzes verstanden.

Die Verwaltung der Kommunikationsverbindung im Sinne der vorliegenden Erfindung umfasst die Verwaltung der Übermittlungskanäle, der Inhalte sowie der Kontaktinformationen von Kommunikationspartnern, mit denen eine Kommunikationsverbindung hergestellt werden kann. Als Übermittlungskanäle werden insbesondere die für die Kommunikationsverbindung erforderlichen Kommunikationskanäle verstanden. Eine Verwaltung dieser Kanäle umfasst das Herstellen einer Kommunikationsverbindung über diese Kanäle, das Überwachen der Verfügbarkeit der Kanäle, sowie das Auswählen eines oder mehrerer der Kanäle.

Die Verwaltungseinheit wird im Folgenden auch als Client oder Applikation bezeichnet. Die Verwaltungseinheit wird hierbei vorzugsweise so ausgelegt, dass diese auf dem Betriebssystem, mit dem das mobile Endgerät betrieben wird, unmittelbar implementiert werden kann.

Die mindestens zwei Anwendungen, die in der Verwaltungseinheit enthalten sind, können Programme sein, die ausschließlich unter Verwendung der Einheiten und Vorrichtungen des mobilen Endgerätes ausgeführt werden. Zusätzlich oder alternativ kann mindestens eine Anwendung einen Dienst darstellen, dessen Ausführung zumindest teilweise von einem Dienste-Server gesteuert oder überwacht wird. Der Dienste-Server ist in diesem Zusammenhang vorzugsweise ein Server des Anbieters des Mobilfunknetzwerkes. Der Dienste-Server kann aber auch einem anderen Diensteanbieter zugeordnet sein. Die Anwendungen sind vorzugsweise in der Verwaltungseinheit implementiert, das heißt werden beim Installieren der Verwaltungseinheit mitgeliefert. Hierdurch kann sichergestellt werden, dass die Anwendungen Erfordernissen entsprechen, die für die Verwaltung durch die Verwaltungseinheit erforderlich sind. Die Anwendungen werden im Folgenden auch als Module bezeichnet.

Die Anwendungen können kommunikationsbezogene Anwendungen sein. Als kommunikationsbezogene Anwendungen werden hierbei Anwendungen verstanden, die mit der Übermittlung von Nachrichten oder Signalen in Kommunikationsverbindungen befasst sind. Hierbei können die Anwendungen die Übermittlung der Nachrichten und Signale initiieren oder überwachen. Zusätzlich oder alternativ können die kommunikationsbezogenen Anwendungen sich auf Kontaktinformationen von Kommunikationspartnern beziehen. Hierbei können die Anwendungen die Kontaktinformationen beispielsweise auslesen, bearbeiten oder speichern. Als Kontaktinformationen werden Informationen betreffend einen potentiellen Kommunikationspartner verstanden. Die Kontaktinformationen können Kontaktdaten wie Name, Email-Adresse und Telefonnummer, aber auch Zustandsangaben, wie "Online" oder "nur mittels SMS oder MMS erreichbar" enthalten. Eine Anwendung, die in der Verwaltungseinheit vorgesehen sein kann, ist beispielsweise eine Anwendung zur Anzeige von Kommunikationsoptionen. Zu den Anwendungen, die sich auf Kontaktinformationen beziehen, zählen auch solche, die keine unmittelbare Bearbeitung der Kontaktinformationen durchführen, sondern beispielsweise lediglich eine Suchfunktion ausführen. Auch Anwendungen, die bezüglich Nachrichten, die über Kommunikationsverbindungen empfangen werden, eine Suchfunktion ausführen, stellen Anwendungen im Sinne der vorliegenden Erfindung dar.

Indem für die mindestens zwei Anwendungen eine gemeinsame Benutzeroberfläche zur Anzeige auf einer Anzeigeeinheit des mobilen Endgerätes vorgesehen ist, können dem Nutzer in der Verwaltungseinheit Angaben zu beziehungsweise Ausgaben aus mehreren Anwendungen gleichzeitig zur Verfügung gestellt werden. Insofern kann die Benutzeroberfläche als eine Schnittstelle zwischen den mindestens zwei Anwendungen bezeichnet werden. Die Benutzeroberfläche dient dem Anzeigen von Informationen auf der Anzeigeeinheit des mobilen Endgerätes, beispielsweise dem Display eines Mobiltelefons. Als gemeinsame Benutzeroberfläche von mindestens zwei Anwendungen wird insbesondere eine Benutzeroberfläche bezeichnet, auf der zumindest zeitweise eine Anzeige zu den mindestens zwei Anwendungen gleichzeitig erfolgt.

Zusätzlich kann der Nutzer des mobilen Endgerätes über die Benutzeroberfläche Informationen und Befehle eingeben, die in der Verwaltungseinheit oder einer damit verbundenen Einheit des mobilen Endgerätes verwaltet werden. Da erfindungsgemäß zumindest eine zusätzliche Schnittstelle zum Austausch von Informationen zwischen den mindestens zwei Anwendungen besteht, ist es zudem möglich auch Informationen, die nicht unmittelbar zur Anzeige führen, für die jeweils andere Anwendung zur Verfügung zu stellen. Durch das zur Verfügung stellen von Informationen für die jeweils andere Anwendung beziehungsweise das Austauschen von Informationen zwischen den Anwendungen wird zum einen eine Synchronisation von sich während der Ausführung der Anwendungen ändernden Informationen möglich. Somit kann jede der Anwendungen stets mit Informationen ausgeführt werden, die den aktuellen Status wiedergeben. Neben dem reinen Aktualisieren oder Synchronisieren, bietet das Vorsehen der mindestens einen zusätzlichen Schnittstelle zwischen den Anwendungen auch die Möglichkeit auf Daten und Informationen, die in der jeweils anderen Anwendung verwendet werden zuzugreifen. Hierdurch ist eine Mehrfachspeicherung von Daten oder Informationen oder die Organisation von Zugriffsmöglichkeiten mehrer Anwendungen auf eine Speichereinheit nicht zwingend erforderlich.

Sind mehr als zwei Anwendungen vorgesehen, können Schnittstellen so vorgesehen sein, dass jede der Anwendungen mit zumindest einer weiteren Anwendung über eine Schnittstelle verbunden ist.

Gemäß einer bevorzugten Ausführungsform weist die Verwaltungseinheit mindestens eine weitere Schnittstelle zu Funktionalitäten des mobilen Endgerätes und/oder zu einem Kommunikationsserver aufweist. Die Funktionalitäten des mobilen Endgerätes können insbesondere die nativen Funktionen des Endgerätes sein, beispielsweise die Anruffunktion, Funktionen zum Senden und Empfangen von Textnachrichten, Auslesen von Informationen beispielsweise aus einem Adressbuch. Der Kommunikationsserver kann ein Dienste-Server eines Anbieters sein, auf dem beispielsweise Zuweisungen von Nutzern zu Gruppen verwaltet werden. Weiterhin kann der Dienste-Server ein Anrufbeantworter-Dienste-Server sein, über den Multimedia-Sprachnachrichten mit der Anrufbeantworternachricht an das mobile Endgerät geleitet werden. Diese MMS-Nachrichten können in der Posteingang-Anwendung verarbeitet werden. Die Schnittstelle zu dem Kommunikationsserver kann beispielsweise als eine Internet Protocol (IP) Schnittstelle an dem mobilen Endgerät zur Verfügung gestellt werden. Indem diese mindestens eine weitere Schnittstelle zu Einheiten, die außerhalb der Verwaltungseinheit liegen, bereitgestellt wird, können die durch die externen Einheiten zur Verfügung gestellten Funktionen, Daten und Informationen in der Verwaltungseinheit verarbeitet und beispielsweise zur Erzeugung von Ausgaben der Anwendungen, die auf der Benutzeroberfläche angezeigt werden, verwendet werden.

Vorzugsweise ist die Benutzeroberfläche in mindestens zwei Teilbereiche unterteilt und Ausgaben der mindestens zwei Anwendungen werden in unterschiedlichen Teilbereichen angezeigt. Durch die Aufteilung der Benutzeroberfläche in Abhängigkeit der Anwendungen, die in der Verwaltungseinheit vorgesehen sind, wird dem Nutzer eine klare Aufteilung angezeigt und dieser kann aufgrund der Anzeige erkennen, welche Anwendung er derzeit nutzt. Da aber auch bei Verwendung einer der Anwendungen die mindestens eine weitere Anwendung in dem weiteren Unterbereich angezeigt wird, kann der Nutzer auch während der Nutzung einer Anwendung über Änderungen in einer weiteren Anwendung informiert werden. Zudem ist das Wechseln zwischen den Anwendungen durch diese Art der Anzeige vereinfacht. Sind mehr als zwei Anwendungen vorgesehen, so wird vorzugsweise für jede Anwendung ein Teilbereich der Benutzeroberfläche zur Verfügung gestellt.

Eine Anwendung, die in der Verwaltungseinheit vorgesehen ist, kann beispielsweise eine Adressbuch-Anwendung oder eine andere Kontaktorganisations-Anwendung sein. In der Adressbuch-Anwendung können Kontaktdaten von potentiellen Kommunikationspartnern hinterlegt sein. Diese können von dem Nutzer in der Anwendung geändert, hinzugefügt und gelöscht werden. In der Adressbuch-Anwendung werden die für den Nutzer relevanten Kontaktinformationen zu den einzelnen Kontakten über die Benutzeroberfläche der Verwaltungseinheit angezeigt. Eine weitere Anwendung kann eine Nachrichten-Anwendung, insbesondere eine Nachrichtenverwaltungseinheit sein, in der Nachrichten von empfangen, hinterlegt, erstellt und versandt werden können. In der Benutzeroberfläche der Verwaltungseinheit wird bei dieser Anwendung vorzugsweise der Ordner angezeigt, in dem eingegangene Nachrichten abgelegt sind, dieser Ordner wird im Folgenden auch als Nachrichteneingangsbox oder Posteingang bezeichnet. In dem Nachrichteneingang werden vorzugsweise die Nachrichten, die über unterschiedliche Kommunikationsverbindungen empfangen wurden, gemeinsam angezeigt. Insbesondere können sowohl Emails als auch SMS und Sprachanrufe in diesem Nachrichteneingang angezeigt werden. Eine weitere Anwendung kann eine Anwendung für eine Gruppe von Kontakten sein. Bei dieser Anwendung ist vorzugsweise die Anzahl der der Gruppe zufügbaren Kontakte begrenzt. Eine weitere mögliche Anwendung, die in der Verwaltungseinheit vorgesehen sein kann, ist Suchanwendung. Diese ist vorzugsweise für die Suche von Daten und Informationen innerhalb der Verwaltungseinheit beziehungsweise in mit der Verwaltungseinheit verbundenen weiteren Einheiten beschränkt. Durch die Suchfunktion wird die Handhabung der Informationen in den einzelnen Anwendungen für den Nutzer weiter erleichtert.

Die Gruppe von Kontakten, auf die sich die Gruppenanwendung bezieht, und die auch als Familie oder Gemeinschaft bezeichnet werden kann, ist vorzugsweise eine Untergruppe von Kontakten aus der Adressbuch-Anwendung der Verwaltungseinheit. Es ist allerdings auch möglich Kontakte zu der Gruppe hinzuzufügen, ohne dass diese zuvor in der Adressbuch-Anwendung als Kontakte hinterlegt waren. Über eine zwischen diesen Anwendungen vorgesehne Schnittstelle kann der beziehungsweise können die zu der Gruppe zugefügten Kontakte auch in der Adressbuch-Anwendung hinterlegt werden. Den Mitgliedern der Gruppe, auf die sich die Gruppenanwendung bezieht, ist mindestens ein Attribut zugeordnet. Dieses Attribut kann neben der Zugehörigkeit zu der Gruppe beispielsweise eine Vergebührungsregel sein, die sich auf Kommunikationsverbindungen bezieht, die zwischen Mitgliedern der Gruppe hergestellt werden. Weiterhin kann den Gruppenmitgliedern ein Attribut zugeordnet werden, das die Anzeige der Kontakte der Gruppenmitglieder betrifft. Beispielsweise kann eine besondere Art der Anzeige der Kontakte in der Gruppenanwendung erfolgen, die sich von der Anzeige in der Adressbuchanwendung unterscheidet.

In der Benutzeroberfläche ist erfindungsgemäß eine Auswahlfunktion implementiert, die Verbindungsoptionen in Abhängigkeit von Angaben mindestens einer der in der Verwaltungseinheit enthaltenen Anwendungen angibt. Die Auswahlfunktion wird als Optionsliste angezeigt. Erfindungsgemäß wird die Auswahlfunktion nur aktiviert, wenn der Nutzer diese aufruft. Will ein Nutzer einem anderen Nutzer eine Nachricht zukommen lassen, so wird bei der Auswahl des Nachrichtenempfängers in einer der Anwendungen der Verwaltungseinheit die Auswahlfunktion beispielsweise in Form einer Optionsliste angezeigt. Die Auswahlfunktion fungiert daher wie eine der anderen Anwendungen der Verwaltungseinheit. Insbesondere ist diese mit zumindest einer weiteren Anwendung über eine weitere Schnittstelle verbunden. Durch die erfindungsgemäß vorgesehene Schnittstelle zwischen Anwendungen in der Verwaltungseinheit wird die Liste der Optionen auf diejenigen Optionen begrenzt, die aktuell für den ausgewählten Kontakt zur Verfügung stehen. Hierbei können sowohl der aktuelle Zustand von Verbindungskanälen beziehungsweise Übermittlungskanälen als auch Einstellungen an dem Gerät, das dem ausgewählten Kontakt zugeordnet ist, berücksichtigt werden. Letzteres kann beispielsweise die Einstellungen sein, ob der Nutzer des anderen Endgerätes eine Applikation, die zur Kommunikation mittels eines bestimmten Dienstes dient, aktiviert hat beziehungsweise sich für den Dienst registriert hat. Die aktuellen Zustände der Verbindungskanäle können beispielsweise durch Netzwerkabdeckung beeinflusst werden. Besonders vorteilhaft wird zusätzlich oder alternativ der aktuelle Zustand des anderen Gerätes, mit dem eine Kommunikationsverbindung aufgebaut werden soll, bei der Erstellung der Optionsliste berücksichtigt. Ist beispielsweise für eine Kommunikationsverbindung eine Verbindung zu einem bestimmten Netz, beispielsweise eine IP-Verbindung erforderlich, so kann überprüft werden ob das Gerät des anderen Nutzers derzeit diese erforderliche Verbindung besitzt. Ist dies nicht der Fall, so wird diese Art der Übermittlung aus der Optionsliste gelöscht beziehungsweise nicht in diese aufgenommen.

Gemäß einer Ausführungsform wird mindestens eine Schnittstelle zwischen mindestens zwei Anwendungen in Abhängigkeit des Zustandes der Benutzeroberfläche hergestellt. Insbesondere wird hierbei als Zustand der Benutzeroberfläche die Anzeige oder Aktivierung von Bereichen oder Teilbereichen verstanden. Besonders bevorzugt wird diese Schnittstelle zwischen einer Suchanwendung und einer weiteren in der Verwaltungseinheit vorgesehenen Anwendung hergestellt. Ist beispielsweise der einer Adressbuch-Anwendung zugeordnete Teilbereich der Anzeige der Benutzeroberfläche von dem Nutzer ausgewählt worden und verwendet dieser anschließend die Suchanwendung, so wird zwischen der Suchanwendung und der Adressbuch-Anwendung eine Schnittstelle hergestellt, über die die Suche in den Daten und Informationen der Adressbuch-Anwendung durchgeführt werden kann. Schnittstellen zu anderen Anwendungen von der Suchfunktion werden zu diesem Zeitpunkt nicht erstellt oder zumindest zeitweise entfernt.

Die Teilbereiche der Benutzeroberfläche, die den einzelnen Anwendungen der Verwaltungseinheit zugeordnet sind, weisen vorzugsweise eine dynamisch veränderbare Größe auf. Unter Größe wird in diesem Zusammenhang die auf der Anzeigeeinheit des mobilen Endgerätes sichtbare Größe des jeweiligen Teilbereiches verstanden. Indem eine dynamische Größenänderung der Teilbereiche vorgesehen ist, kann dem Nutzer eine von ihm getroffene Auswahl einer derzeit zu verwendenden Anwendung visuell besser verdeutlicht werden. Zudem kann durch die Größenänderung mehr Raum bereitgestellt werden um Ausgaben beziehungsweise Informationen einer ausgewählten Anwendung anzuzeigen. Beispielsweise kann der Teilbereich der Benutzeroberfläche, der der aktuell verwendeten Anwendung zugeordnet ist, so weit maximiert werden, dass die weiteren Teilbereiche für die weiteren Anwendungen nur noch durch einen Teilbereich angezeigt werden, in dem der Name der Anwendung angegeben ist. Es ist auch möglich die dynamische Größenänderung auf einzelne Anwendungen zu begrenzen oder Anwendungen hiervon auszuschließen. So wird vorzugsweise der Teilbereich, der einer Suchanwendung zugeordnet ist, vorzugsweise in seiner Größe nicht verändert, auch wenn diese Anwendung ausgewählt wird.

Gemäß einem weiteren Aspekt der Erfindung betrifft diese ein Verfahren zum Verwalten von Kommunikationsverbindungen auf einem mobilen Endgerät mit den Merkmalen des Anspruchs 7.

Als Ausgabe einer Anwendung werden im Sinne der Erfindung die Informationen bezeichnet, die in einer Anwendung erzeugt oder in dieser hinterlegt sind und dem Nutzer zumindest zeitweise angezeigt werden sollen. Bei einer Adressbuch-Anwendung sind die Ausgaben beispielsweise Kontaktinformationen zu Kontakten des Nutzers, die auch als Kommunikationspartner bezeichnet werden. Indem zur Anzeige von Ausgaben einer Anwendung zumindest teilweise auf Informationen einer der anderen Anwendungen zugegriffen wird, kann die Aktualität der angezeigten Ausgaben gewährleistet werden.

Vorzugsweise greift mindestens eine Anwendung auf Funktionalitäten des mobilen Endgerätes zu und/oder auf Informationen auf einem Kommunikationsserver zu. Hierdurch kann beispielsweise der Online-Status eines potentiellen Kommunikationspartners angezeigt werden oder die Zugehörigkeit des potentiellen Kommunikationspartners zu einer Gruppe von Kontakten angezeigt werden. Durch den Zugriff auf externe Einheiten, wie die Funktionalitäten und/oder einen Kommunikationsserver, ist es für den Nutzer des mobilen Endgerätes nicht erforderlich eine Aktualisierung von Daten und Informationen betreffend einzelner Kontakte manuell in der Verwaltungseinheit und insbesondere in jeder der Anwendungen der Verwaltungseinheit durchzuführen.

Erfindungsgemäß liest mindestens eine Anwendung Statusinformationen zu einem Kommunikationspartner aus einer anderen Anwendung auf dem mobilen Endgerät und/oder aus Einträgen in einem Kommunikationsserver aus. Als Statusinformationen werden insbesondere die Verfügbarkeit eines Kommunikationspartners für eine Kommunikation über bestimmte Kommunikationsverbindungen, beispielsweise IP-Kommunikation verstanden. Auch die Anmeldung für einen bestimmten Dienst an dem Kommunikationsserver kann als Statusinformation verstanden werden.

Die Benutzeroberfläche kann mindestens zwei Teilbereiche aufweisen und die Größe der Teilbereiche und/oder die Anzeige in den Teilbereichen kann dynamisch verändert werden. Besonders bevorzugt wird die Größe der Teilbereiche durch Aktionen des Nutzers, beispielsweise Auswahl einer Anwendung, geändert. Alternativ kann die Größe eines oder mehrerer Teilbereiche aber auch verändert werden, wenn ein neues Ereignis in dem oder den zugehörigen Anwendungen auftritt. Beispielsweise kann beim Empfang einer neuen Nachricht der Teilbereich, der für die Anzeige des Posteingangs vorgesehen ist, vergrößert werden. Dadurch kann der Nutzer zum einen über den Erhalt der Nachricht informiert werden und kann gleichzeitig aufgrund des vergrößerten Teilbereiches Detailinformationen zu der Nachricht lesen.

Gemäß einer Ausführungsform des Verfahrens wird bei Änderung einer Information in einer der Anwendungen zumindest die Anzeige mindestens einer weiteren Anwendung verändert. Hierdurch kann beispielsweise in einer Adressbuch-Anwendung angezeigt werden, wenn einer der darin enthaltenen Kontakte einer Gruppe von Kontakten der Gruppen-Anwendung hinzugefügt wurde. Dies kann beispielsweise durch ein Symbol neben dem Namen des Kontaktes angezeigt werden.

Erfindungsgemäß wird beim Auswählen eines Kommunikationspartners in einer der Anwendungen eine Auswahlliste erzeugt, in der zur Verfügung stehende Kommunikationsverbindungen angezeigt werden. Die Auswahl des Kommunikationspartners kann durch Anklicken oder andersartiges Selektieren des Kontaktes in einer Adressbuchanwendung oder einer Gruppen-Anwendung erfolgen. Die Optionen der Auswahlliste können ebenfalls durch Anklicken oder andersartiges Selektieren durch den Nutzer ausgewählt werden. Bei Auswahl einer Option der Auswahlliste wird die ausgewählte Art der Kommunikationsverbindung unmittelbar aufgebaut.

Das erfindungsgemäße Verfahren wird vorzugsweise unter Verwendung der erfindungsgemäßen Verwaltungseinheit durchgeführt.

Die Einheiten, Einrichtungen und Funktionalitäten, die im Rahmen der vorliegenden Erfindung beschrieben werden, können zumindest teilweise als Software, insbesondere Anwendung, realisiert sein. Zumindest teilweise sind die Einheiten, Einrichtungen und/oder Funktionalitäten zusammengefasst.

Als Anwendungen werden im Sinne der vorliegenden Erfindung beispielsweise Anwendungen verstanden, wie ein Adressbuch-Modul, ein Gruppenanwendungs-Modul, ein Nachrichteneingang-Modul, ein Suchmodul, ein Chat (Instant Messaging)-Modul oder ein Optionslisten-Modul. Die Anwendungen oder Module sind insoweit in der Verwaltungseinheit integriert oder implementiert, dass über diese eine Anzeige von Ausgaben aus den Anwendungen erfolgen kann. Die Anwendungen müssen aber nicht vollständig in der Verwaltungseinheit integriert sein. Vielmehr können die Anwendungen auf Funktionalitäten oder Einheiten außerhalb der Verwaltungseinheit zugreifen.

Vorteile und Merkmale, die bezüglich des erfindungsgemäßen Verfahrens beschrieben werden gelten - soweit anwendbar - entsprechend für die erfindungsgemäße Verwaltungseinheit.

Die Erfindung wird im Folgenden anhand der beiliegenden Figuren erneut erläutert. Es zeigen:
Figur 1: eine schematische Darstellung der Benutzeroberfläche einer Ausführungsform der erfindungsgemäßen Verwaltungseinheit in einer Grundeinstellung;
Figur 2: eine schematische Darstellung der Benutzeroberfläche aus Figur 1 in einer ersten Einstellung;
Figur 3: eine schematische Darstellung der Benutzeroberfläche aus Figur 1 in einer zweiten Einstellung;
Figur 4: eine schematische Darstellung der Benutzeroberfläche aus Figur 1 in einer dritten Einstellung; und
Figur 5: eine schematische Darstellung der Benutzeroberfläche aus Figur 1 in einer vierten Einstellung.

Die Benutzeroberfläche 1 der erfindungsgemäßen Verwaltungseinheit, die im Folgenden auch als User Interface des Client bezeichnet wird, kann auf gängigen Mobiltelefonen angezeigt werden auf denen die Verwaltungseinheit installiert und verwendet werden kann.

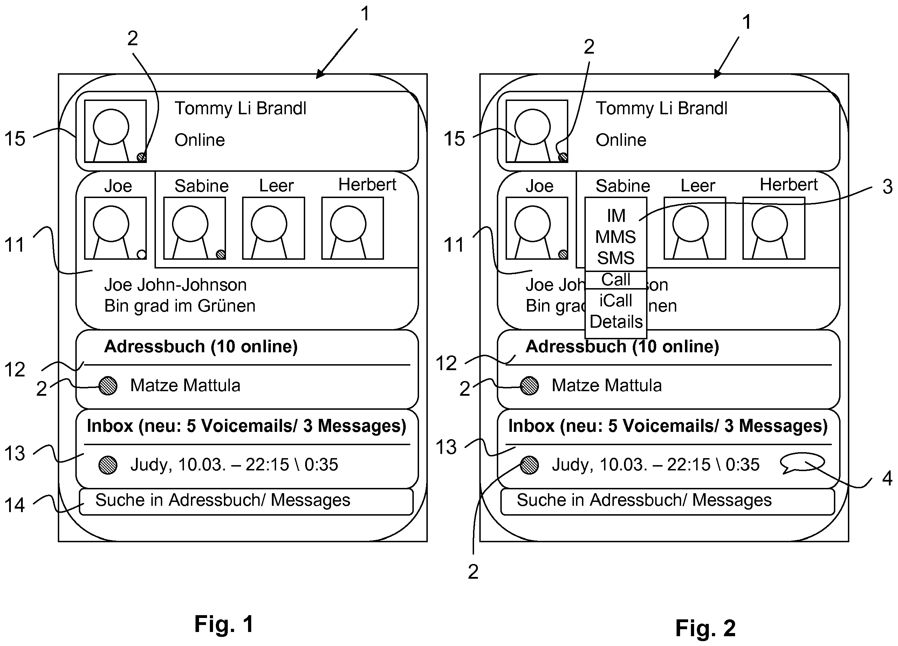

In Figur 1 ist die Benutzeroberfläche 1, die im Folgenden auch als Applikationsfenster bezeichnet wird, einer Ausführungsform einer Verwaltungseinheit beziehungsweise eines Clients, die im Folgenden auch als Applikation bezeichnet wird, schematisch dargestellt. Die Benutzeroberfläche 1 besteht aus einer integrierten Benutzerschnittstelle, die dem Nutzer drei Dienste in einer einheitlichen Darstellung präsentiert. Dabei ist jedem Dienst ein eigener Teilbereich 11, 12, 13 des Applikationsfensters 1 zugeordnet. Die Verwaltungseinheit bietet weiterhin die Möglichkeit, die eigenen Einstellungen zu verwalten sowie eine Volltextsuche im gesamten Mobilgerät oder einzelnen Bereichen durchzuführen, so dass die Benutzerschnittstelle insgesamt aus fünf Hauptteilbereichen 11, 12, 13, 14, 15 besteht.

Die fünf Teilbereich 11, 12, 13, 14, 15 sind, wie in Figur 1 dargestellt, grafisch in einem Stapelkonzept angeordnet, wobei jeweils ein Teilbereich 11 expandiert und die anderen Teilbereiche 12, 13, 14, 15 kollabiert dargestellt werden. Der expandierte Teilbereich 11 zeigt die vollen Informationen des jeweiligen Teilbereichs 11, während die kollabiert dargestellten Teilbereiche 12, 13, 14, 15 zusammenfassende Statusinformationen des jeweiligen Teilbereichs 12, 13, 14, 15 anzeigen.

Die drei Dienste, die als Anwendungen in der Verwaltungseinheit vorgesehen sind, sind eine Gruppenanwendung, die im Folgenden als Happy Family bezeichnet wird, eine Adressbuch-Anwendung und Nachrichteneingang. Dieser umfasst den Erhalt und die Verarbeitung von Anrufbeantworter-MMS-Nachrichten, was im Folgenden als Visual Voicemail bezeichnet wird.

In der in Figur 1 gezeigten Grundeinstellung, das heißt der Einstellung, die beim Start der Applikation vorliegt, ist der Teilbereich 11, der der Happy Family zugeordnet ist expandiert, während die anderen Bereiche 12, 13, 14, 15 kollabiert sind.

Im Happy Family Teilbereich 11 werden die vom Nutzer gewählten Familienmitglieder mit Namen und Bild, sowie dem Online Status 2 des Mitglieds und einem vom Familienmitglied selbst bestimmbaren Statustext angezeigt. Des Weiteren kann das detaillierte Profil des Familienmitglieds angezeigt werden.

In Figur 2 ist die Grundeinstellung der Applikation gezeigt, wobei hier einer der Kontakte beziehungsweise ein Familienmitglied in der Gruppenanwendung ausgewählt wurde. Durch das Auswählen des Kontaktes wird eine Auswahlliste 3 für Verbindungsoptionen aufgerufen und angezeigt. In der dargestellten Ausführungsform stehen zur Kommunikation mit dem aktuell selektierten Familienmitglied die folgenden Optionen zur Verfügung: Sprachanruf, Internetanruf, SMS (Short Messaging Service), MMS und Instant Message.

Abhängig vom Typ und Status eines Kontakts werden die möglichen Kommunikationsformen dynamisch an die Möglichkeiten, den Kontakt zu erreichen, angepasst. So bietet die Applikation zum Beispiel für reine Internet-Kontakte keine Möglichkeit an, SMS oder MMS zu senden.

Neben der Anzeige der Happy Family Mitglieder können der Familie weitere Mitglieder bis zur maximal zulässigen Höchstzahl von beispielsweise vier Mitgliedern hinzugefügt werden, sowie auch Mitglieder wieder aus der Familie entfernt werden.

Die weiteren Teilbereiche 12, 13, 14, 15 des Clients neben dem Happy Family Teilbereich 11 sind nach Start der Applikation kollabiert. Der kollabierte Adressbuchbereich 12 zeigt die Gesamtzahl der Mitglieder des Adressbuchs, die gerade online sind sowie den Namen und den Online-Status 2 desjenigen Adressbuchmitglieds, dessen Online-Status sich als letztes verändert hat.

Der Nachrichteneingangs-Teil 13 des Clients zeigt im kollabierten Zustand die Gesamtzahl der neu eingegangenen Nachrichten, sowie Details zur neuesten eingegangene Nachricht. Nachrichten können dabei SMS, MMS, Emails, Visual Voicemail MMS sowie Instant Messaging Nachrichten sein. Neben Absender, Zeitpunkt des Eingangs und Typ 4 der Nachricht werden der Online-Status 2 des Absenders sowie die Länge der Nachricht in Zeichen oder Minuten angezeigt.

Im Teilbereich 15 des eigenen Profils werden der eigene Name, das eigene Bild, der eigene Online-Status 2 und der Statustext angezeigt.

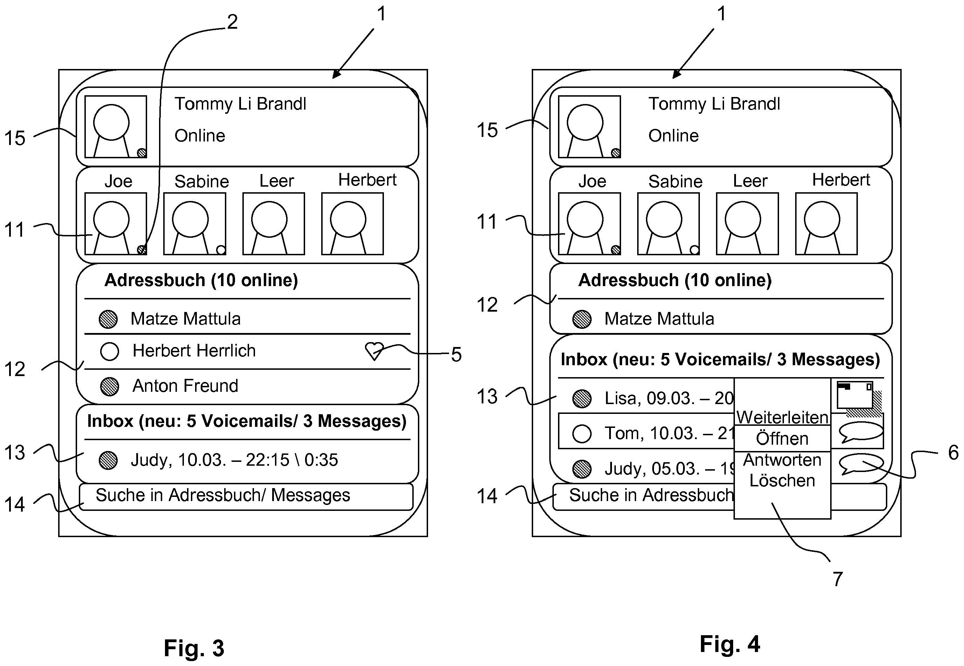

Wechselt der Nutzer vom Happy Family Teilbereich 11 zum Adressbuch Teilbereich 12, so wird der Happy Family Bereich 11 kollabiert und der Adressbuch Teil 12 expandiert. Dieser Zustand ist in Figur 3 gezeigt.

Im kollabierten Happy Family Teilbereich 11 sind dabei weiterhin die Bilder der Familienmitglieder in verkleinerter Form sichtbar. Weiterhin wird der Online-Status 2 der Mitglieder grafisch anhand eines Farbsymbols dargstellt. Die Namen und der Statustext der Mitglieder sind in der kollabierten Form nicht mehr sichtbar.

Der Adressbuch Bereich 12 bietet in expandierter Form über eine Schnittstelle Zugriff auf das Adressbuch des unterliegenden Mobilegeräts und reichert diese Informationen mit weiteren Informationen wie dem Online-Status an. Weiterhin sind Adressbuchkontakte die in der Familie des Nutzers enthalten sind oder bei denen der Nutzer in der Familie enthalten ist, durch ein Herz 5 gekennzeichnet.

Bei Auswahl eines Kontaktes in dem Adressbuch-Teilbereich 12 wird eine Auswahlliste für Verbindungsoptionen aufgerufen und angezeigt. Beispielsweise können zur Kommunikation mit dem aktuell selektierten Kontakt die folgenden Optionen zur Verfügung stehen: Sprachanruf, Internetanruf, SMS (Short Messaging Service), MMS und Instant Message. Somit ist ähnlich, wie in dem Teilbereich 11 der Happy Family eine direkte Kommunikation mit dem selektierten Adressbucheintrag beziehungsweise Kontakt möglich und die derzeit möglichen Kommunikationsformen werden dynamisch angezeigt.

Sofern aus dem Adressbuch in die Suchfunktion 14 gesprungen wird, bleibt das Adressbuch 12 geöffnet und die Suche beschränkt sich auf die Adressbucheinträge. Das Suchergebnis 14 wird in dem Teilbereich 12 der Adressbuchanwendung angezeigt und kann mit jedem neu in den Suchbereich eingegebenen Buchstaben dynamisch verfeinert werden.

Verlässt der Nutzer den Adressbuch-Teilbereich 12 und wählt den Nachrichteneingang Teilbereich 13 aus, so wird, wie in Figur 4 dargestellt, eine Liste aller eingegangenen Nachrichten unabhängig vom Typ - SMS, MMS, Email oder Visual Voicemail Nachricht - angezeigt.

Neben dem Namen des Absenders werden Zeit des Eingangs sowie Länge und Typ der Nachricht grafisch durch Piktogramme 6 dargstellt. Neue Nachrichten werden durch eine Textdarstellung in fetter Schriftart besonders hervorgehoben. Wo verfügbar wird der Online-Status 2 des Absenders direkt bei der Nachricht angezeigt, so dass der Nutzer direkt entscheiden kann, ob und wie er mit dem Absender der Nachricht kommunizieren kann.

Die selektierte Nachricht kann über eine Optionsliste oder ein Kontextmenü 7 bearbeitet werden, wie es in Figur 4 verdeutlicht ist. Hierbei werden in der Optionsliste insbesondere Bearbeitungsoptionen, wie dem Öffnen der Nachricht, dem Weiterleiten der Nachricht, dem Antworten auf die Nachricht und dem Löschen der Nachricht angeboten.

Springt der Nutzer vom Nachrichteneingang-Teilbereich 13 in den Such-Teilbereich 14, so bleibt der Nachrichteneingang 13 expandiert und die Suchfunktion operiert ausschließlich auf den Nachrichten.

Als letzter Teilbereich 15 in der Applikation ist der Teilbereich zu nennen, mit dem das eigene Profil angezeigt und verwaltet werden kann. Wird dieser Teilbereich 15 ausgewählt, so wird dieser Teilbereich 15 analog zu den anderen Teilbereichen 11, 12, 13, 14 expandiert dargestellt. Der Nutzer hat dann die Möglichkeit, sein Profil, das anderen Nutzer angezeigt wird, zu bearbeiten. Beispielsweise kann ein Bild oder Foto gesetzt werden. Des Weiteren kann in diesem Teilbereich der Online-Status 2 und der Statustext des Nutzers, der anderen Nutzern übermittelt wird, dynamisch eingestellt werden. Hierzu kann eine Auswahlliste angezeigt werden, aus der der Nutzer den derzeitigen Status auswählen kann. Dieser kann beispielsweise sein "Online", "Abwesend" oder "Bitte nicht stören".

Zusätzlich zu den nativen Kommunikationsmechanismen wie SMS und MMS aber auch Email bietet die Applikation Instant Messaging Funktionalität. Die Instant Messaging Funktionalität schließt die Verwendung von Emoticons ein.

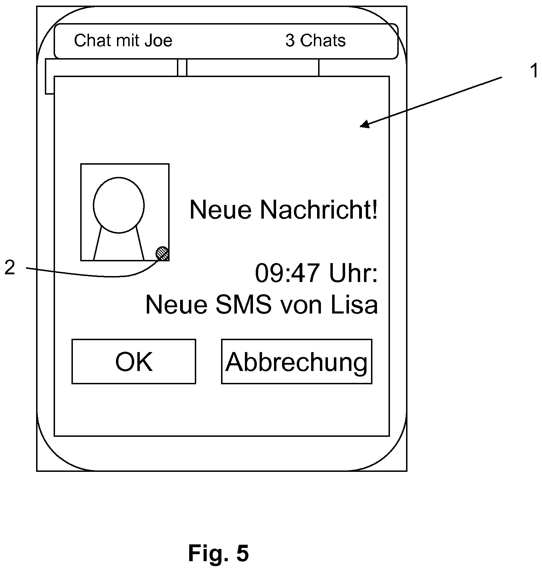

Auf dem Mobiltelefon ankommende Nachrichten werden wie in Figur 5 verdeutlicht direkt dem Nutzer signalisiert. Auch hier wird direkt wieder der Präsenzstatus 2 des Absenders angezeigt.

Das Bedienkonzept der Verwaltungseinheit ist auf eine Nutzung auf Mobilgeräten mit limitierten Ein- und Ausgabemöglichkeiten optimiert. So lassen sich nach Start der Applikation die einzelnen Teilbereiche mit maximal zwei Tastendrücken auswählen.

In sämtlichen Teilbereichen kann über ein kontextsensitives Menü direkt eine Kommunikation gestartet werden, die die abhängig vom Online-Zustand des Kommunikationspartners zur Verfügung stehenden Kommunikationsmethoden anbietet.

Die Applikation besteht aus den folgenden logischen Komponenten: Geräteschnittstelle, IP Community Schnittstelle, Happy Family Modul, Adressbuch Modul, Nachrichteneingangsmodul, Suchmodul und der Profilverwaltung

Die Komponenten übernehmen hierbei die folgenden Aufgaben.

Die Geräteschnittstelle erlaubt der Applikation Zugriff auf die nativen Funktionen des Geräts (wie z.B. Auslesen des Adressbuchs). Die nativen Funktionen sind im Einzelnen ein lesender und schreibender Zugriff auf das Adressbuch des Geräts, der Zugriff auf eingehende Nachrichten, die wie beispielsweise SMS und MMS direkt im Gerät eingehen, das Initiieren von Anrufen, sowie Versand von Nachrichten wie SMS und MMS aus der Applikation heraus.

Die IP Community Schnittstelle stellt eine Verbindung von der Applikation auf dem Mobilgerät über eine Datenschnittstelle zu einer IP basierten Community Plattform her. Darüber stellt die Applikation die folgenden Funktionen bereit. Austausch des Online Status, des Status Text sowie der dynamischen Profilkomponenten (Bild, Spitzname etc.) zwischen den Nutzern und den Versand und Empfang IP basierter Sofortnachrichten.

Das Happy Family Modul übernimmt die Steuerung der Happy Family Logik. Dazu stellt es insbesondere folgende Funktionen bereit. Das Assoziieren von Adressbucheinträgen mit dem Happy Family Status, das Überwachen der maximalen Anzahl von Familienmitgliedern, das Hinzufügen und Löschen von Familienmitgliedern sowie den Versand einer Benachrichtugungs-SMS bei Hinzufügen und Löschen von Familienmitgliedern an alle Familienmitglieder.

Das Happy Family Modul beinhaltet insbesondere folgende Merkmale. Die Gruppenmitglieder, das heißt die Happy Family wird in einem zusätzlichen Profil zum Telefonbuch angelegt. Hierzu kann eine Gruppenverwaltung genutzt werden. Mit der Eingabe der Rufnummer des ersten Happy Family Teilnehmers wird der Dienst automatisch gebucht. Der Nutzer wird über einen Pop-Up Screen über die Buchung informiert, als Buchungsbestätigung erhält er zusätzlich eine SMS. Über die Benutzeroberfläche beziehungsweise den Teilbereich der Benutzeroberfläche, der der Gruppeanwendung Happy Family zugeordnet ist, kann die Rufnummern der Happy Family Teilnehmer geändert werden, neue Teilnehmer hinzuzufügen beziehungsweise die Gruppengröße durch das Löschen von Teilnehmern reduziert werden. Dabei ist zu berücksichtigen, dass die Happy Family immer mindestens einen Teilnehmer enthalten muss. Anderenfalls wird die Anwendung nicht ausgeführt.

Das Adressbuchmodul übernimmt das Auslesen des Geräteadressbuchs sowie die Anreicherung mit den zusätzlichen Informationen wie beispielsweise dem Online-Status der Adressbucheinträge. Im Einzelnen sind die Funktionen des Adressbuchmoduls daher das Lesen der Adressbucheinträge aus dem Mobilgerät bei Start der Applikation, Zurückschreiben geänderter Einträge, Zuordnung der aus der IP Community Schnittstelle erhalten Online Informationen mit den Adressbucheinträgen sowie die Initiierung der Kommunikation mit den Adressbucheinträgen.

Das Nachrichteneingangs-Modul kümmert sich um den Zugriff auf empfangene Nachrichten über die Geräte beziehungsweise die IP Community-Schnittstelle sowie das Management der Nachrichten. Das bedeutet im Einzelnen der Zugriff auf empfangene SMS, MMS, Email und Voicemail MMS im Gerät über die Geräteschnittstelle, Empfang von Instant Messages über die Community-Schnittstelle, Korrelation der Absenderinformationen mit den Online-Statusinformationen aus der Community-Schnittstelle, Anzeige/Abspielen der ausgewählten Nachricht, Weiterleiten, Beantworten und Löschen der selektierten Nachricht und das Erstellen von neuen Nachrichten.

Das Suchmodul ermöglicht die Suche im gesamten Mobilgerät beziehungsweise im aktuell ausgewählten Teilbereich. Dabei wird eine Volltextsuche unterstützt.

Das Profilverwaltungsmodul ermöglicht dem Nutzer, sein eigenes Profil, das anderen Kunden dargeboten wird, zu verwalten.

Wesentlich ist die Interaktion zwischen den Komponenten beziehungsweise Anwendungen und Modulen der Applikation. Diese Interaktion findet basierend auf folgenden Informationen statt. Der Online-Status von Kommunikationspartnern wird durchgängig in sämtlichen Bereichen der Applikation angezeigt. Dies gilt für Einträge in der Happy Family und im Adressbuch genauso wie für die Absenderinformationen bei eingehenden Nachrichten. Der Familienstatus, das heißt die Happy Family Mitgliedschaft wird ähnlich wie der Online-Status auch im Adressbuch und beim Absender von eingehenden Nachrichten angezeigt. Die Kommunikation mit Kontakten ist aus allen Teilbereichen des Clients in analoger Weise möglich. Dabei werden jeweils abhängig vom Online-Zustand des Partners verschiedene Kommunikationsmethoden angeboten.

Merkmale, die in dem in den Figuren gezeigten Ausführungsbeispielen zusammen mit anderen Merkmalen realisiert sind, können auch einzeln realisiert sein ohne, dass die weiteren Merkmale ebenfalls oder äquivalent erfüllt sein müssen.

## Patentansprüche

1. Verwaltungseinheit zur Verwaltung von Kommunikationsverbindungen auf einem mobilen Endgerät, wobei in der Verwaltungseinheit zumindest zwei Anwendungen enthalten sind, wobei die mindestens zwei Anwendungen eine gemeinsame Benutzeroberfläche (1) zur Anzeige auf einer Anzeigeeinheit des mobilen Endgerätes aufweisen, zumindest eine zusätzliche Schnittstelle zum Austausch von Informationen zwischen den mindestens zwei Anwendungen besteht, **dadurch gekennzeichnet, dass** in der Benutzeroberfläche (1) eine Auswahlfunktion (3) implementiert ist, die Verbindungsoptionen in Abhängigkeit von Angaben mindestens einer der in der Verwaltungseinheit enthaltenen Anwendungen angibt und die Verbindungsoptionen in Form einer Liste ausgegeben werden, die auf die Optionen begrenzt ist, die aktuell für einen ausgewählten Kontakt zur Verfügung stehen.

2. Verwaltungseinheit nach Anspruch 1, **dadurch gekennzeichnet, dass** diese mindestens eine weitere Schnittstelle zu Funktionalitäten des mobilen Endgerätes und/oder zu einem Kommunikationsserver aufweist.

3. Verwaltungseinheit nach einem der Ansprüche 1 oder 2, **dadurch gekennzeichnet, dass** die Benutzeroberfläche (1) in mindestens zwei Teilbereiche (11, 12, 13, 14, 15) unterteilt ist und Ausgaben der mindestens zwei Anwendungen in unterschiedlichen Teilbereichen (11, 12, 13, 14, 15) angezeigt werden.

4. Verwaltungseinheit nach einem der Ansprüche 1 bis 3, **dadurch gekennzeichnet, dass** eine Anwendung eine Adressbuch-Anwendung, eine Anwendung eine Nachrichten-Anwendung, eine Anwendung eine Suchanwendung und/oder eine Anwendung eine Anwendung für eine Gruppe von Kontakten ist, wobei vorzugsweise die Gruppe von Kontakten eine Untergruppe von Kontakten aus der Adressbuch-Anwendung darstellt und den Mitgliedern der Gruppe mindestens ein Attribut zugeordnet ist.

5. Verwaltungseinheit nach einem der Ansprüche 1 bis 4, **dadurch gekennzeichnet, dass** mindestens eine Schnittstelle zwischen mindestens zwei Anwendungen in Abhängigkeit des Zustandes der Benutzeroberfläche (1) hergestellt wird.

6. Verwaltungseinheit nach einem der Ansprüche 1 bis 5, **dadurch gekennzeichnet, dass** die Teilbereiche (11, 12, 13, 14, 15) der Benutzeroberfläche (1) eine dynamisch veränderbare Größe aufweisen.

7. Verfahren zum Verwalten von Kommunikationsverbindungen auf einem mobilen Endgerät, wobei in einer Verwaltungseinheit mindestens zwei Anwendungen implementiert sind, wobei mindestens eine der Anwendungen zumindest für eine Anzeige von Ausgaben der Anwendung auf einer Benutzeroberfläche (1) zumindest teilweise auf Informationen einer der mindestens einen anderen Anwendung zugreift, mindestens eine Anwendung Statusinformationen zu einem Kommunikationspartner aus einer anderen Anwendung auf dem mobilen Endgerät und/oder aus Einträgen in einem Kommunikationsserver ausliest **dadurch gekennzeichnet, dass** beim Auswählen eines Kommunikationspartner in einer der Anwendungen die Verbindungsoptionen in Form einer Liste ausgegeben werden, die auf die Optionen begrenzt ist, die aktuell für einen ausgewählten Kontakt zur Verfügung stehen.

8. Verfahren nach Anspruch 7, **dadurch gekennzeichnet, dass** mindestens eine Anwendung auf Funktionalitäten des mobilen Endgerätes zugreift und/oder auf Informationen auf einem Kommunikationsserver zugreift.

9. Verfahren nach einem der Ansprüche 7 oder 8, **dadurch gekennzeichnet, dass** die Benutzeroberfläche (1) mindestens zwei Teilbereiche (11, 12, 13, 14, 15) aufweist und die Größe der Teilbereiche (11, 12, 13, 14, 15) und/oder die Anzeige in den Teilbereichen (11, 12, 13, 14, 15) dynamisch verändert wird.

10. Verfahren nach einem der Ansprüche 7 bis 9, **dadurch gekennzeichnet, dass** bei Änderung einer Information in einer der Anwendungen zumindest die Anzeige mindestens einer weiteren Anwendung verändert wird.

11. Verfahren nach einem der Ansprüche 7 bis 10, **dadurch gekennzeichnet, dass** in einer Anwendung Informationen zu Multimedia-Sprachnachrichten, die an dem mobilen Endgerät empfangen werden, erzeugt und angezeigt werden.

12. Verfahren nach einem der Ansprüche 7 bis 11, **dadurch gekennzeichnet, dass** dieses mit einer Verwaltungseinheit nach einem der Ansprüche 1 bis 6 ausgeführt wird.

## Claims

1. Management unit for managing communication connections on a mobile terminal, wherein in the managing unit at least two applications are contained, wherein the at least two applications have a common user interface (1) for display on a display unit of the mobile terminal, at least one additional interface for exchange of information between the at least two applications exists, **characterized in that** in the user interface (1) a selection function (3) is implemented, which gives the connection options in dependency of indications of at least one of the applications contained in the management unit and that the connection options are given in the form of a list, which is limited to the options, which are currently available for a selected contact.

2. Management unit according to claim 1, **characterized in that** it has at least one additional interface to functionalities of the mobile terminal and/or to a communication server.

3. Management unit according to anyone of claims 1 or 2, **characterized in that** the user interface (1) is divided in at least to partial areas (11, 12, 13, 14, 15) und that the outputs of the at least two applications is displayed in different partial areas (11, 12, 13, 14, 15).

4. Management unit according to anyone of claims 1 to 3, **characterized in that** one application is an address book application, one application is a message application, one application is a search application and/or one application is an application for a group of contacts, wherein preferably the group of contacts is a sub-group of contacts from the address book application and at least one attribute is assigned to the members of the group.

5. Management unit according to anyone of claims 1 to 4, **characterized in that** at least one interface between at least two applications is established in dependency of the status of the user interface (1).

6. Management unit according to anyone of claims 1 to 5, **characterized in that** the partial areas (11, 12, 13, 14, 15) of the user interface (1) have a dynamically changeable size.

7. Method for managing communication connections on a mobile terminal, wherein in a management unit at least two applications are implemented, wherein at least one of the applications at least for a display of outputs of the application on one user interface (1) at least partially accesses information of one of the at least one other application, at least one application reads status information of a communication partner from a different application on the mobile terminal and/or from entries in a communication server, **characterized in that** when selecting a communication partner in an application, the connection options are output in form of a list, which is limited to the options, which are currently available for a selected contact.

8. Method according to claim 7, **characterized in that** at least one application accesses functionalities of the mobile terminal and/or information on a communication server.

9. Method according to anyone of claims 7 or 8, **characterized in that** the user interface (1) has at least two partial areas (11, 12, 13, 14, 15) and the size of the partial areas (11, 12, 13, 14, 15) and/or the display in the partial areas (11, 12, 13, 14, 15) is changed dynamically.

10. Method according to anyone of claims 7 to 9, **characterized in that** upon changing information in one of the applications, at least the display of at least one further application is changed.

11. Method according to anyone of claims 7 to 10, **characterized in that** in one application information on multimedia voice messages, which are received at the mobile terminal, is generated and displayed.

12. Method according to anyone of claims 7 to 11, **characterized in that** the method is carried out with a management unit according to anyone of claims 1 to 6.

## Revendications

1. Unité de gestion servant à gérer des liaisons de communication sur un terminal mobile, dans laquelle au moins deux applications sont contenues dans l'unité de gestion, dans laquelle les au moins deux applications présentent une surface d'utilisateur (1) commune servant à l'affichage sur une unité d'affichage du terminal mobile, au moins une interface supplémentaire servant à échanger des informations entre les au moins deux applications est présente, **caractérisée en ce qu'**une fonction de sélection (3) est implémentée dans la surface d'utilisateur (1), laquelle indique des options de liaison en fonction des indications d'au moins une des applications contenues dans l'unité de gestion, et les options de liaison sont fournies en sortie sous la forme d'une liste, qui se limite aux options, qui sont disponibles de manière instantanée pour un contact sélectionné.

2. Unité de gestion selon la revendication 1, **caractérisée en ce que** celle-ci présente une interface supplémentaire concernant des fonctionnalités du terminal mobile et/ou concernant un serveur de communication.

3. Unité de gestion selon l'une quelconque des revendications 1 ou 2, **caractérisée en ce que** la surface d'utilisateur (1) est divisée en au moins deux zones partielles (11, 12, 13, 14, 15) et des fournitures en sortie des au moins deux applications sont affichées dans des zones partielles (11, 12, 13, 14, 15) différentes.

4. Unité de gestion selon l'une quelconque des revendications 1 à 3, **caractérisée en ce qu'**une application est une application de répertoire, une application est une application de messages, une application est une application de recherche et/ou une application est une application pour un groupe de contacts, dans laquelle de préférence le groupe de contacts constitue un sous-groupe de contacts issu de l'application de répertoire et au moins un attribut est associé aux membres du groupe.

5. Unité de gestion selon l'une quelconque des revendications 1 à 4, **caractérisée en ce qu'**au moins une interface est établie entre au moins deux applications en fonction de l'état de la surface d'utilisateur (1).

6. Unité de gestion selon l'une quelconque des revendications 1 à 5, **caractérisée en ce que** les zones partielles (11, 12, 13, 14, 15) de la surface d'utilisateur (1) présentent une dimension variable de manière dynamique.

7. Procédé servant à gérer des liaisons de communication sur un terminal mobile, dans lequel au moins deux applications sont implémentées dans une unité de gestion, dans lequel au moins une des applications a recours au moins en partie à des informations d'une de l'au moins une autre application au moins pour un affichage des fournitures en sortie de l'application sur une interface d'utilisateur (1), au moins une application lit des informations de statut concernant un élément de communication issu d'une autre application sur le terminal mobile et/ou issu d'entrées dans un serveur de communication, **caractérisé en ce que** lors de la sélection d'un élément de communication dans une des applications, les options de liaison sont fournies en sortie sous la forme d'une liste, qui se limite aux options, qui sont disponibles de manière instantanée pour un contact sélectionné.

8. Procédé selon la revendication 7, **caractérisé en ce qu'**au moins une application a recours à des fonctionnalités du terminal mobile et/ou a recours à des informations sur un serveur de communication.

9. Procédé selon l'une quelconque des revendications 7 ou 8, **caractérisé en ce que** la surface d'utilisateur (1) présente au moins deux zones partielles (11, 12, 13, 14, 15) et la dimension des zones partielles (11, 12, 13, 14, 15) et/ou l'affichage dans les zones partielles (11, 12, 13, 14, 15) sont modifiés de manière dynamique.

10. Procédé selon l'une quelconque des revendications 7 à 9, **caractérisé en ce que** lors d'un changement d'une information dans une des applications, au moins l'affichage d'au moins une autre application est modifié.

11. Procédé selon l'une quelconque des revendications 7 à 10, **caractérisé en ce que** des informations concernant des messages vocaux multimédias, qui sont reçus au niveau du terminal mobile, sont générées et affichées dans une application.

12. Procédé selon l'une quelconque des revendications 7 à 11, **caractérisé en ce que** celui-ci est exécuté avec une unité de gestion selon l'une quelconque des revendications 1 à 6.
